(19) Europäisches Patentamt
European Patent Office
Office européen des brevets

(11) Veröffentlichungsnummer: **0 444 474 B1**

(12) **EUROPÄISCHE PATENTSCHRIFT**

(45) Veröffentlichungstag der Patentschrift: **24.08.94**

(51) Int. Cl.[5]: **C08F 4/646**, C08F 10/00

(21) Anmeldenummer: **91102054.3**

(22) Anmeldetag: **14.02.91**

# (54) Lösliche Katalysatorsysteme zur Polymerisation von C2- bis C10-Alk-1-enen.

(30) Priorität: **26.02.90 DE 4005947**

(43) Veröffentlichungstag der Anmeldung:
**04.09.91 Patentblatt 91/36**

(45) Bekanntmachung des Hinweises auf die Patenterteilung:
**24.08.94 Patentblatt 94/34**

(84) Benannte Vertragsstaaten:
**AT BE DE ES FR GB IT NL**

(56) Entgegenhaltungen:
**EP-A- 0 269 986**
**EP-A- 0 302 424**
**EP-A- 0 316 155**
**EP-A- 0 336 127**
**EP-A- 0 336 128**
**EP-A- 0 347 128**
**DE-A- 3 826 075**

(73) Patentinhaber: **BASF Aktiengesellschaft**
**Carl-Bosch-Strasse 38**
**D-67063 Ludwigshafen (DE)**

(72) Erfinder: **Rieger, Bernhard,Dr.**
**Saarlandstrasse 40**
**W-6700 Ludwigshafen (DE)**
Erfinder: **Brintzinger, Hans,Prof. Dr.**
**Unterdorfstrasse 17**
**CH-8274 Taegerwilen (CH)**
Erfinder: **Roell, Werner,Dr.**
**Alpsteinweg 2**
**W-7750 Konstanz (DE)**
Erfinder: **Reinmuth,Annette**
**Buecklestrasse 29**
**W-7750 Konstanz (DE)**
Erfinder: **Barsties, Elke**
**Blarerstrasse 35/37**
**W-7750 Konstanz (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 444 474 B1

Rank Xerox (UK) Business Services
(3.10/3.09/3.3.3)

**Beschreibung**

Die vorliegende Erfindung betrifft lösliche Katalysatorsysteme zur Polymerisation von $C_2$- bis $C_{10}$-Alk-1-enen, enthaltend als aktive Bestandteile

a) einen Metallocenkomplex der allgemeinen Formel I,

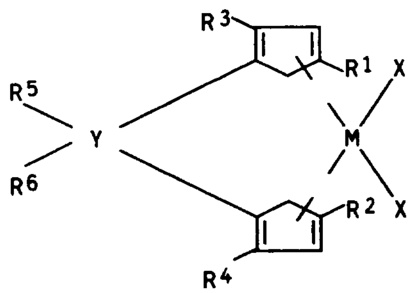

(I)

in der die Substituenten folgende Bedeutung haben:

| | |
|---|---|
| $R^1$, $R^2$ | verzweigtes $C_4$- bis $C_{10}$-Alkyl, 5- bis 7-gliedriges Cycloalkyl, das seinerseits ein $C_1$- bis $C_6$-Alkyl als Substituent tragen kann, $C_6$- bis $C_{15}$-Aryl oder Arylalkyl; |
| $R^3$-$R^6$ | $C_1$- bis $C_8$-Alkyl; |
| M | Titan, Zirkonium, Hafnium, Vanadium |
| Y | Silicium oder Germanium |
| X | Halogen oder $C_1$- bis $C_8$-Alkyl |

b) sowie eine offenkettige oder cyclische Alumoxanverbindung der allgemeinen Formel II bzw. III

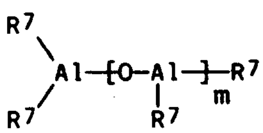

(II)

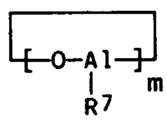

(III)

wobei $R^7$ eine $C_1$-$C_4$-Alkylgruppe bedeutet und m für eine Zahl von 5 bis 30 steht.

Außerdem betrifft die Erfindung die Herstellung von Polymerisaten des Propylens mit Hilfe dieser Katalysatorsysteme, die hiernach erhältlichen Polymerisate sowie Folien und Formkörper aus diesen Polymerisaten.

Für die Polymerisation von Alk-1-enen können neben den unlöslichen Ziegler-Natta-Katalysatoren auch lösliche Katalysatorsysteme verwendet werden. Bei letzteren handelt es sich um Komplexverbindungen von Metallen der IV. und V. Nebengruppe des Periodensystems mit organischen Liganden, die in Verbindung mit oligomeren Aluminiumverbindungen eingesetzt werden (EP-A 185 918, EP-A 283 739 und GB-A 2 207 136). Die bei diesen Katalysatorsystemen verwendeten Komplexverbindungen enthalten als organische Liganden meist Cyclopentadienylgruppen, die mit dem Übergangsmetall $\pi$-Bindungen eingehen. Häufig werden als Katalysatoren auch solche Übergangsmetallkomplexe verwendet, die neben organischen Liganden noch an das Metallatom gebundene Halogene aufweisen.

In den EP-A 284 708 und 316 155 sowie der US-A 4 794 096 werden lösliche Katalysatorsysteme zur Polymerisation von Alk-1-enen beschrieben, bei denen als Komplexverbindungen Bis(cyclopentadienyl)-komplexe von Metallen der IV. Nebengruppe des Periodensystems verwendet werden, wobei die beiden Cyclopentadienylringe durch ein alkylsubstituiertes Silicium- oder Germaniumatom verbunden sind. Dabei können auch solche Übergangsmetallkomplexe eingesetzt werden, bei denen die Cyclopentadienylringe durch Alkylgruppen substituiert sind und die als weitere Liganden zwei an das Übergangsmetall gebundenen Halogene enthalten. Als oligomere Aluminiumverbindungen werden dabei vorzugsweise lineare oder cyclische Alumoxanverbindungen der allgemeinen Formel II oder III verwendet.

Mit Hilfe derartiger Katalysatorsysteme sind Polymerisate des Propylens erhältlich, die sich unter anderem durch eine relativ enge Molekulargewichtsverteilung auszeichnen. Im Gegensatz zu Polypropylen, welches durch Verwendung von unlöslichen Ziegler-Natta-Katalysatoren hergestellt wird, liegen die Schmelzpunkte dieser Polymerisate zum Teil erheblich unterhalb von 160 °C, so daß sie aufgrund dieser geringeren thermischen Stabilität für bestimmte Anwendungsbereiche nur bedingt geeignet sind.

Der vorliegenden Erfindung lag daher die Aufgabe zugrunde, diesem Nachteil abzuhelfen und ein verbessertes lösliches Katalysatorsystem zu entwickeln, das die Herstellung von Polyalk-1-enen mit einem breiten Anwendungsspektrum ermöglicht.

Demgemäß wurden die eingangs definierten löslichen Katalysatorsysteme gefunden.

Erfindungsgemäß werden dabei Metallocenkomplexe der allgemeinen Formel I verwendet, wobei $R^1$ und $R^2$ vorzugsweise für verzweigte $C_4$- bis $C_{10}$-Alkylgruppen, insbesondere für tert. Butyl-, tert. Pentyl-, tert. Hexyl-, tert. Heptyl- oder tert. Octylgruppen und $R^3$, $R^4$, $R^5$ und $R^6$ vorzugsweise für $C_1$-$C_4$-Alkylgruppen, insbesondere für Methyl- oder Ethylgruppen stehen. Bei diesen verzweigten Substituenten handelt es sich um sperrige Reste, die unerwarteterweise zu einer Erhöhung der Stereospezifität, d.h. der Isotaktizität der daraus erhältlichen Polymerisate führen.

Als Zentralatome kommen neben Titan, Zirkonium und Hafnium noch Vanadium in Frage, wobei vorzugsweise Zirkonium eingesetzt wird. Daneben enthält der Metallocenkomplex noch ein Brückenglied zwischen den Cyclopentadienylringen, wobei Y bevorzugt für Silicium steht. Desweiteren weist der Metallocenkomplex noch einen Substituenten X auf, der Fluor, Chlor, Brom, Jod oder ein $C_1$- bis $C_8$-Alkyl, beispielsweise eine Methyl-, Ethyl-, Propyl- oder Butylgruppe, sein kann. Bevorzugt wird dabei Chlor verwendet.

Beispiele für besonders bevorzugte Metallkomplexe sind u.a.
Dimethylsilandiylbis(-3-tert.butyl-5-methylcyclopentadienyl)zirkoniumdichlorid,
Diethylsilandiylbis(-3-tert.butyl-5-methylcyclopentadienyl)zirkoniumdichlorid,
Methylethylsilandiylbis(-3-tert.butyl-5-methylcyclopentadienyl)zirkoniumdichlorid,
Dimethylsilandiylbis(-3-tert.butyl-5-ethylcyclopentadienyl)zirkoniumdichlorid
Dimethylsilandiylbis(-3-tert.pentyl-5-methylcyclopentadienyl)zirkoniumdichlorid und
Dimethylsilandiylbis(-3-tert.butyl-5-methylcyclopentadienyl)dimethylzirkonium.

Die Synthese derartiger Komplexe kann nach an sich bekannten Methoden erfolgen, wobei die Umsetzung der entsprechend substituierten Cyclopentadienylanionen mit Halogeniden von Titan, Zirkonium, Hafnium oder Vanadin bevorzugt ist. Beispiele für entsprechende Herstellungsverfahren sind u.a. im Journal of Organometallic Chemistry, 369 (1989), 359-370 beschrieben.

Neben dem Metallocenkomplex enthält das erfindungsgemäße Katalysatorsystem noch lineare oder cyclische Alumoxanverbindungen der allgemeinen Formel II oder III

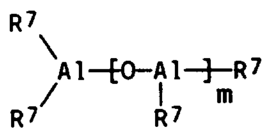
(II)
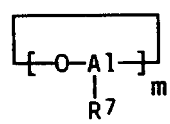
(III)

wobei $R^7$ bevorzugt für Methyl- oder Ethylgruppen und m bevorzugt für eine Zahl von 10 bis 25 steht.

Die Herstellung dieser Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen Alumoxane als Gemische unterschiedlich langer, sowohl linearer als auch cyclischer Kettenmoleküle vor, so daß m als Mittelwert anzusehen ist.

Bei der Polymerisation von Alk-1-enen mit Hilfe des erfindunggemäßen Katalysatorsystems ist es vorteilhaft, den Metallocenkomplex a) und die Alumoxanverbindung b) in solchen Mengen zu verwenden, daß das atomare Verhältnis zwischen Aluminium aus dem Alumoxan b) und dem Übergangsmetall aus dem Metallocenkomplex a) im Bereich von 10:1 bis $10^6$:1, insbesondere im Bereich von 10:1 bis $10^4$:1 liegt. Dabei können die beiden Katalysatorbestandteile in beliebiger Reihenfolge einzeln oder als Gemisch in den Polymerisationsreaktor eingebracht werden.

Mit Hilfe dieser löslichen Katalysatorsysteme lassen sich Polymerisate von Alk-1-enen herstellen. Darunter werden Homo- und Copolymerisate von $C_2$- bis $C_{10}$-Alk-1-enen verstanden, wobei als Monomere vorzugsweise Ethylen, Propylen, But-1-en, Pent-1-en und Hex-1-en verwendet werden. Die erfindungsgemäßen Katalysatorsysteme eignen sich insbesondere zur Herstellung von Polypropylen und von Copolymerisaten des Propylens mit untergeordneten Anteilen anderer $C_2$- bis $C_{10}$-Alk-1-ene, insbesondere von Ethylen und But-1-en.

Die Herstellung dieser Polymerisate kann in den üblichen, für die Polymerisation von Alk-1-enen verwendeten Reaktoren entweder absatzweise oder bevorzugt kontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann.

Die Polymerisation wird bei Drücken von 0,1 bis 100 bar und Temperaturen von -50 bis 150 °C durchgeführt. Bevorzugt sind dabei Drücke von 0,5 bis 10 bar und Temperaturen von -20 bis +100 °C.

Polymerisationsreaktionen mit Hilfe der erfindungsgemäßen Katalysatorsysteme lassen sich in der Gasphase, in flüssigen Monomeren und in inerten Lösungsmitteln durchführen. Bevorzugt wird dabei die Polymerisation in Lösungsmitteln, insbesondere in flüssigen Kohlenwasserstoffen wie Benzol oder Toluol angewandt. In diesem Fall ist es vorteilhaft, wenn man pro Liter des Lösungsmittels $10^{-4}$ bis $10^{-1}$ mol Aluminium als Alumoxan verwendet.

Die mittlere Molmasse der gebildeten Polymerisate kann mit den in der Polymerisationstechnik üblichen Methoden gesteuert werden, beispielsweise durch Zufuhr von Reglern wie Wasserstoff, oder durch Veränderung der Reaktionstemperaturen. Durch Senkung der Reaktionstemperatur lassen sich Polymerisate mit erhöhten mittleren Molmassen herstellen.

Die mit Hilfe des erfindungsgemäßen Katalysatorsystems hergestellten Polymerisate zeichnen sich durch einen erhöhten Schmelzpunkt, eine relativ enge Molekulargewichtsverteilung und einem hohen Grad an Stereospezifität (hohe Anteile isotaktischer Molekülstrukturen) aus.

Aufgrund dieser Eigenschaften eignen sie sich insbesondere zur Herstellung von Folien, Rohren, Belägen, Fasern, Hohlkörpern, Spritzgußartikeln und von Formteilen für den Fahrzeugbau.

Beispiel 1 bis 3

In einem Rührautoklaven mit einem Nutzvolumen von 1 l wurden 350 ml getrocknetes Toluol vorgelegt und anschließend mit einer Lösung von 0,45 g Methylalumoxan (durchschnittliche Kettenlänge m = 20) in 30 ml Toluol versetzt. Dabei wurden pro Liter des Lösungsmittels $7{,}6 \cdot 10^{-3}$ mol Aluminium verwendet. Anschließend wurde eine Lösung von $25{,}3 \cdot 10^{-6}$ mol Dimethylsilandiylbis(-3-tert.-butyl-5-methylcyclopentadienyl)-zirkoniumdichlorid (Darstellung siehe Journal of Organometallic Chemistry, 369 [1989], 359-370) in 20 ml Toluol hinzugefügt, so daß das atomare Verhältnis zwischen Aluminium und Zirkonium 300:1 betrug. Diese Mischung wurde zunächst 30 min lang gerührt, und anschließend wurde Propylen bei einem Druck von 2 bar eingepreßt und bei konstantem Druck polymerisiert. Die jeweiligen Reaktionstemperaturen der 3 Beispiele sind der nachstehenden Tabelle zu entnehmen. Nach einer Reaktionsdauer von 60 min entfernte man das unverbrauchte Propylen und fügte dem Reaktionsgemisch anschließend ein Gemisch aus 1 l Methanol und 10 ml konzentrierter Salzsäure hinzu. Das ausgefallene Polymerisat wurde abfiltriert, mit Methanol gewaschen und im Vakuum getrocknet.

Die Menge der in den drei Beispielen erhaltenen Polypropylene sowie deren mittlere Molmassen, Molekulargewichtsverteilungen (Gewichtsmittel $\overline{M}w$ pro Zahlenmittel $\overline{M}n$), Schmelzpunkte und Isotaktizitäten sind in der nachstehenden Tabelle zusammen mit den jeweiligen Produktivitäten des Katalysatorsystems (g produziertes Polypropylen pro g eingesetztes Zirkonium) wiedergegeben.

Vergleichsversuche A und B

Unter den Bedingungen der Beispiele 1 bis 3 wurde Propylen polymerisiert, wobei im Unterschied dazu als Metallocenkomplex Dimethylsilandiylbis(-3-tert.-butylcyclopentadienyl)-zirkoniumdichlorid verwendet wurde. Die jeweiligen Reaktionstemperaturen der Vergleichsversuche A und B sind zusammen mit den Mengen der dabei erhaltenen Polypropylene, deren mittleren Molmassen, Molekulargewichtsverteilungen, Schmelzpunkten und Isotaktizitäten sowie den jeweiligen Produktivitäten des Katalysatorsystems in der nachstehenden Tabelle wiedergegeben.

Vergleichsversuche C und D

Unter den Bedingungen der Beispiele 1 bis 3 wurde Propylen polymerisiert, wobei im Unterschied dazu als Metallkomplex Dimethylsilandiylbis(-3-isopropyl-5-methylcyclopentadienyl)-zirkoniumdichlorid verwendet wurde. Die jeweiligen Reaktionstemperaturen der Vergleichsversuche C und D sind zusammen mit den Mengen der dabei erhaltenen Polypropylene, deren mittleren Molmassen, Molekulargewichtsverteilungen, Schmelzpunkten und Isotaktizitäten sowie den jeweiligen Produktivitäten des Katalysatorsystems in der nachstehenden Tabelle wiedergegeben.

Ein Vergleich zwischen den Beispielen 1-3 und den Vergleichsversuchen A-D zeigt, daß es mit Hilfe des erfindungsgemäßen Katalysatorsystems möglich ist, Polypropylen herzustellen, welches neben einer hohen Isotaktizität und einer engen Molekulargewichtsverteilung einen erhöhten Schmelzpunkt aufweist.

Tabelle

| | Polymerisations-temperatur [°C] | Menge des erhaltenen Propylens [g] | Gewichts-mittel [$\bar{M}_w$] | Zahlen-mittel [$\bar{M}_n$] | $\frac{\bar{M}_w}{\bar{M}_n}$ | Taktizität [in %] | Schmelz-punkt [°C] | Produktivität [g Polypropylen/ g Zirkonium] |
|---|---|---|---|---|---|---|---|---|
| **Beispiele** | | | | | | | | |
| 1 | 0 | 0,69 | 113 000 | 49 000 | 2,31 | 98 | 163 | 300 |
| 2 | 25 | 2,77 | 44 000 | 21 000 | 2,10 | 97 | 162 | 1 200 |
| 3 | 50 | 11,54 | 9 500 | 3 600 | 2,65 | 93 | 149 | 5 000 |
| **Vergleichsversuche** | | | | | | | | |
| A | 0 | 1,15 | 71 000 | 36 000 | 1,97 | 95 | 153 | 500 |
| B | 50 | 18,00 | 2 000 | 800 | 2,50 | 74 | 128 | 7 800 |
| C | 0 | 0,92 | 106 000 | 65 600 | 1,62 | 73 | 157 | 400 |
| D | 60 | 152,10 | 8 800 | 1 800 | 4,89 | 34 | 65 | 65 900 |

Die Isotaktizität der erhaltenen Polypropylene wurde mit Hilfe eines $^{13}C$-NMR-Spektroskopie-Gerätes der Firma Bruker bei 145 °C und mit 1,2-Dichlorotetradeuteroethan als Lösungsmittel ermittelt. Dabei wurde das Verhältnis isotaktischer d.h. stereospezifischer Molekülstrukturen zu nichtisotaktischen Molekülstrukturen bestimmt, die im Kernresonanzspektrum jeweils unterschiedliche Signale aufweisen.

**Patentansprüche**
**Patentansprüche für folgende Vertragsstaaten : AT, BE, DE, FR, GB, IT, NL**

1. Katalysatorsysteme zur Polymerisation von $C_2$- bis $C_{10}$-Alk-1-enen, enthaltend als aktive Bestandteile

   a) einen Metallocenkomplex der allgemeinen Formel I,

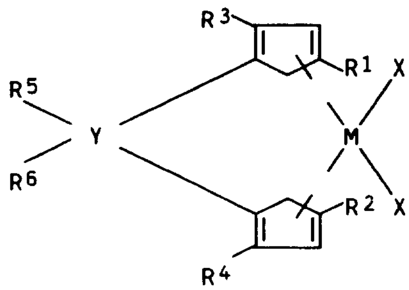

(I)

   in der die Substituenten folgende Bedeutung haben:

   | | |
   |---|---|
   | $R^1$, $R^2$ | verzweigtes $C_4$- bis $C_{10}$-Alkyl, 5- bis 7-gliedriges Cycloalkyl, das seinerseits ein $C_1$- bis $C_6$-Alkyl als Substituent tragen kann, $C_6$- bis $C_{15}$-Aryl oder Arylalkyl ; |
   | $R^3$-$R^6$ | $C_1$- bis $C_8$-Alkyl |
   | M | Titan, Zirkonium, Hafnium, Vanadium |
   | Y | Silicium oder Germanium |
   | X | Halogen oder $C_1$- bis $C_8$-Alkyl |

   b) sowie eine offenkettige oder cyclische Alumoxanverbindung der allgemeinen Formel II bzw. III

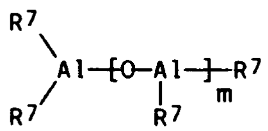

(II)

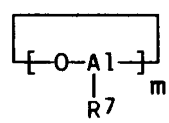

(III)

   wobei $R^7$ eine $C_1$-$C_4$-Alkylgruppe bedeutet und m für eine Zahl von 5 bis 30 steht.

2. Katalysatorsysteme nach Anspruch 1, in denen die Reste $R^1$ und $R^2$ für verzweigte $C_4$- bis $C_{10}$-Alkylgruppen stehen.

3. Katalysatorsysteme nach Anspruch 1 oder 2, in denen $R^3$, $R^4$, $R^5$ und $R^6$ für $C_1$- bis $C_4$-Alkylgruppen stehen.

4. Katalysatorsysteme nach den Ansprüchen 1 bis 3, in denen X Chlor bedeutet.

5. Katalysatorsysteme nach den Ansprüchen 1 bis 4, in denen M für Zirkonium steht.

6. Katalysatorsysteme nach den Ansprüchen 1 bis 5, in denen Y Silicium bedeutet.

7. Katalysatorsysteme nach den Ansprüchen 1 bis 6, in denen der Metallocenkomplex a) und die Alumoxanverbindung b) in solchen Mengen verwendet werden, daß das atomare Verhältnis zwischen Aluminium aus dem Alumoxan b) und dem Übergangsmetall aus dem Metallocenkomplex a) im Bereich von 10:1 bis $10^6$:1 liegt.

8. Verfahren zur Herstellung von Polymerisaten von $C_2$- bis $C_{10}$-Alk-1-enen bei Drücken von 0,1 bis 100 bar und Temperaturen von -50 bis 150 °C mit Hilfe eines Katalysatorsystems bestehend aus Biscyclopentadienylkomplexen von Übergangsmetallen und Alumoxanverbindungen, dadurch gekennzeichnet, daß man hierzu Katalysatorsysteme gemäß den Ansprüchen 1 bis 7 verwendet.

**Patentansprüche für folgenden Vertragsstaat : ES**

1. Verfahren zur Herstellung von Katalysatorsystemen zur Polymerisation von $C_2$- bis $C_{10}$-Alk-1-enen, dadurch gekennzeichnet, daß man folgende aktive Bestandteile verwendet:
   a) einen Metallocenkomplex der allgemeinen Formel I,

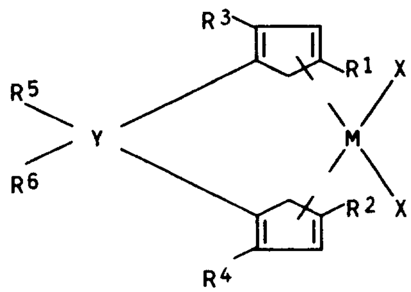

(I)

in der die Substituenten folgende Bedeutung haben:

| | |
|---|---|
| $R^1$, $R^2$ | verzweigtes $C_4$- bis $C_{10}$-Alkyl, 5- bis 7-gliedriges Cycloalkyl, das seinerseits ein $C_1$- bis $C_6$-Alkyl als Substituent tragen kann, $C_6$- bis $C_{15}$-Aryl oder Arylalkyl ; |
| $R^3$-$R^6$ | $C_1$- bis $C_8$-Alkyl |
| M | Titan, Zirkonium, Hafnium, Vanadium |
| Y | Silicium oder Germanium |
| X | Halogen oder $C_1$- bis $C_8$-Alkyl |

   b) sowie eine offenkettige oder cyclische Alumoxanverbindung der allgemeinen Formel II bzw. III

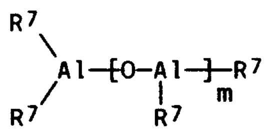

(II)

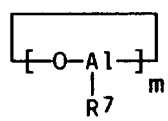

(III)

wobei $R^7$ eine $C_1$-$C_4$-Alkylgruppe bedeutet und m für eine Zahl von 5 bis 30 steht.

2. Verfahren nach Anspruch 1, dadruch gekennzeichnet, daß die Reste $R^1$ und $R^2$ für verzweigte $C_4$- bis $C_{10}$-Alkylgruppen stehen.

3. Verfahren nach Anspruch 1 oder 2, dadurch gekennzeichnet, daß $R^3$, $R^4$, $R^5$ und $R^6$ für $C_1$- bis $C_4$-Alkylgruppen stehen.

4. Verfahren nach den Ansprüchen 1 bis 3, dadurch gekennzeichnet, daß X Chlor bedeutet.

5. Verfahren nach den Ansprüchen 1 bis 4, dadurch gekennzeichnet, daß M für Zirkonium steht.

6. Verfahren nach den Ansprüchen 1 bis 5, dadurch gekennzeichnet, daß Y Silicium bedeutet.

7. Verfahren nach den Ansprüchen 1 bis 6, dadurch gekennzeichnet, daß der Metallocenkomplex a) und die Alumoxanverbindung b) in solchen Mengen verwendet werden, daß das atomare Verhältnis zwischen Aluminium aus dem Alumoxan b) und dem Übergangsmetall aus dem Metallocenkomplex a) im Bereich von 10:1 bis $10^6$:1 liegt.

8. Verfahren zur Herstellung von Polymerisaten von $C_2$- bis $C_{10}$-Alk-1-enen bei Drücken von 0,1 bis 100 bar und Temperaturen von -50 bis 150 °C mit Hilfe eines Katalysatorsystems bestehend aus Biscyclopentadienylkomplexen von Übergangsmetallen und Alumoxanverbindungen, dadurch gekennzeichnet, daß man hierzu Katalysatorsysteme verwendet, die nach den Verfahren der Ansprüche 1 bis 7 hergestellt wurden.

## Claims

## Claims for the following Contracting States : AT, BE, DE, FR, GB, IT, NL

**1.** A catalyst system for the polymerization of $C_2$- to $C_{10}$-alk-1-enes, containing, as active constituents,

a) a metallocene complex of the general formula I

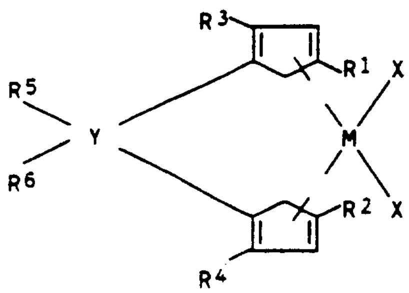

(I)

where

| | |
|---|---|
| $R^1$ and $R^2$ | are branched $C_4$- to $C_{10}$-alkyl, 5- to 7-membered cycloalkyl, which may itself be substituted by $C_1$- to $C_6$-alkyl, or are $C_6$- to $C_{15}$-aryl or aralkyl; |
| $R^3$ to $R^6$ | are $C_1$- to $C_8$-alkyl, |
| M | is titanium, zirconium, hafnium or vanadium, |
| Y | is silicon or germanium, and |
| X | is halogen or $C_1$- to $C_8$-alkyl, |

b) and an open-chain or cyclic aluminoxane compound of the general formula II or III

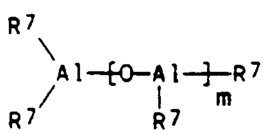

(II)

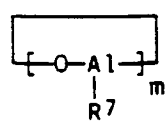

(III)

where $R^7$ is $C_1$-$C_4$-alkyl, and m is from 5 to 30.

**2.** A catalyst system as claimed in claim 1, where $R^1$ and $R^2$ are branched $C_4$- to $C_{10}$-alkyl.

**3.** A catalyst system as claimed in claim 1 or 2, where $R^3$, $R^4$, $R^5$ and $R^6$ are $C_1$- to $C_4$-alkyl.

**4.** A catalyst system as claimed in any of claims 1 to 3, where X is chlorine.

**5.** A catalyst system as claimed in any of claims 1 to 4, where M is zirconium.

**6.** A catalyst system as claimed in any of claims 1 to 5, where Y is silicon.

**7.** A catalyst system as claimed in any of claims 1 to 6, where the metallocene complex a) and the aluminoxane compound b) are used in such amounts that the atomic ratio between aluminum from the aluminoxane b) and the transition metal from the metallocene complex a) is in the range from 10:1 to $10^6$:1.

**8.** A process for the preparation of a polymer of a $C_2$- to $C_{10}$-alk-1-ene at from 0.1 to 100 bar and at from -50 to 150 °C, using a catalyst system comprising a biscyclopentadienyl complex of a transition metal and an aluminoxane compound, which comprises using a catalyst system as claimed in any of claims 1 to 7.

## Claims for the following Contracting State : ES

**1.** A process for the preparation of a catalyst system for the polymerization of $C_2$- to $C_{10}$-alk-1-enes, wherein the following active constituents are used:

a) a metallocene complex of the general formula I

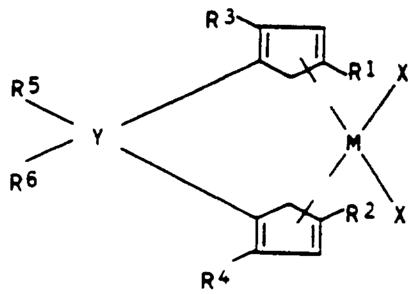

(I)

where

| | |
|---|---|
| $R^1$ and $R^2$ | are branched $C_4$- to $C_{10}$-alkyl, 5- to 7-membered cycloalkyl, which may itself be substituted by $C_1$- to $C_6$-alkyl, or are $C_6$-to $C_{15}$-aryl or aralkyl; |
| $R^3$ to $R^6$ | are $C_1$- to $C_8$-alkyl, |
| M | is titanium, zirconium, hafnium or vanadium, |
| Y | is silicon or germanium, and |
| X | is halogen or $C_1$- to $C_8$-alkyl, |

b) and an open-chain or cyclic aluminoxane compound of the general formula II or III

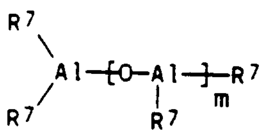

(II)

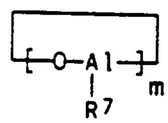

(III)

where $R^7$ is $C_1$-$C_4$-alkyl, and m is from 5 to 30.

**2.** A process as claimed in claim 1, wherein $R^1$ and $R^2$ are branched $C_4$- to $C_{10}$-alkyl.

**3.** A process as claimed in claim 1 or 2, wherein $R^3$, $R^4$, $R^5$ and $R^6$ are $C_1$- to $C_4$-alkyl.

**4.** A process as claimed in any of claims 1 to 3, wherein X is chlorine.

**5.** A process as claimed in any of claims 1 to 4, wherein M is zirconium.

**6.** A process as claimed in any of claims 1 to 5, wherein Y is silicon.

**7.** A process as claimed in any of claims 1 to 6, wherein the metallocene complex a) and the aluminoxane compound b) are used in such amounts that the atomic ratio between aluminum from the aluminoxane b) and the transition metal from the metallocene complex a) is in the range from 10:1 to $10^6$:1.

**8.** A process for the preparation of a polymer of a $C_2$- to $C_{10}$-alk-1-ene at from 0.1 to 100 bar and at from -50 to 150 °C, using a catalyst system comprising a biscyclopentadienyl complex of a transition metal and an aluminoxane compound, which comprises using a catalyst system which has been prepared by the process of claims 1 to 7.

**Revendications**
**Revendications pour les Etats contractants suivants : AT, BE, DE, FR, GB, IT, NL**

**1.** Systèmes catalytiques pour la polymérisation d'alc-1-ènes en $C_2$ a $C_{10}$, qui contiennent, à titre de constituants actifs,

a) un complexe de métallocène de la formule générale I

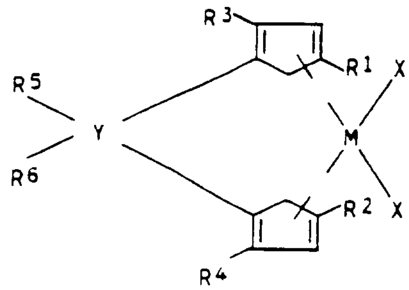

(I)

dans laquelle les substituants ont les significations qui suivent

$R^1$, $R^2$ représentent chacun un radical alkyle en $C_4$ à $C_{10}$ ramifié, un radical cycloalkyle pentagonal à heptagonal, qui, à son tour, peut porter un groupe alkyle en $C_1$ à $C_6$ à titre de substituant, un radical aryle en $C_6$ à $C_{15}$, ou un radical arylalkyle;

$R^3$-$R^6$ représentent chacun un radical alkyle en $C_1$ à $C_8$,

M représente le titane, le Zirconium, l'hafnium, le vanadium,

Y représente le silicium ou le germanium,

X représente un atome d'halogène ou un radical alkyle en $C_1$ à $C_8$,

b) ainsi qu'un composé d'alumoxanne à chaîne ouverte ou cyclique, de la formule générale II ou III

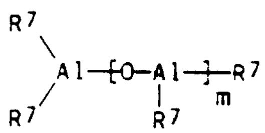

(II)

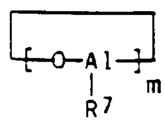

(III)

où $R^7$ représente un radical alkyle en $C_1$ à $C_4$ et m représente un nombre dont la valeur varie de 5 à 30.

**2.** Systèmes catalytiques suivant la revendication 1, caractérisés en ce que les substituants $R^1$ et $R^2$ représentent des radicaux alkyle en $C_4$ à $C_{10}$ ramifies.

**3.** Systèmes catalytiques suivant la revendication 1 ou 2, caractérisés en ce que les symboles $R^3$, $R^4$, $R^5$ et $R^6$ représentent des radicaux alkyle en $C_1$ à $C_4$.

**4.** Systèmes catalytiques suivant l'une quelconque des revendications 1 à 3, caractérisés en ce que X représente du chlore.

**5.** Systèmes catalytiques suivant l'une quelconque des revendications 1 à 4, caractérisés en ce que M représente le zirconium.

**6.** Systèmes catalytiques suivant l'une quelconque des revendications 1 à 5, caractérisés en ce que Y représente le silicium.

**7.** Systèmes catalytiques suivant l'une quelconque des revendications 1 à 6, caractérisés en ce que le complexe de métallocène a) et le composé d'alumoxanne b) s'utilisent en proportions telles que le rapport atomique entre l'aluminium provenant de l'alumoxanne b) et le métal de transition provenant du complexe de métallocène a) fluctue de 10:1 à $10^6$:1.

**8.** Procédé de préparation de polymères d'alc-1-ènes en $C_2$ à $C_{10}$, à des températures de -50 à 150 °C et sous des pressions de 0,1 à 100 bars, à l'aide d'un système catalytique constitué de complexes de bis-cyclopentadiényle de métaux de transition et de composés d'alumoxanne, caractérisé en ce que l'on utilise, pour sa mise en oeuvre, des systèmes catalytiques suivant l'une quelconque des revendications 1 à 7.

**Revendications pour l'Etat contractant suivant : ES**

1. Procédé de préparation de systèmes catalytiques pour la polymérisation d'alc-1-ènes en $C_2$ à $C_{10}$, caractérisé en ce que l'on utilise les constituants actifs qui suivent :

   a) un complexe de métallocène de la formule générale I

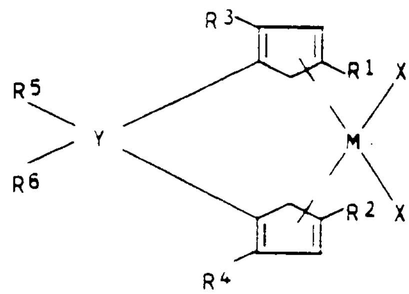

(I)

   dans laquelle les substituants ont les significations qui suivent

   $R^1$, $R^2$ représentent chacun un radical alkyle en $C_4$ à $C_{10}$ ramifié, un radical cycloalkyle pentagonal à heptagonal, qui, à son tour, peut porter un groupe alkyle en $C_1$ à $C_6$ à titre de substituant, un radical aryle en $C_6$ à $C_{15}$, ou un radical arylalkyle;

   $R^3$-$R^6$ représentent chacun un radical alkyle en $C_1$ à $C_8$,

   M représente le titane, le zirconium, l'hafnium, le vanadium,

   Y représente le silicium ou le germanium,

   X représente un atome d'halogène ou un radical alkyle en $C_1$ à $C_8$,

   b) ainsi qu'un composé d'alumoxanne à chaîne ouverte ou cyclique, de la formule générale II ou III

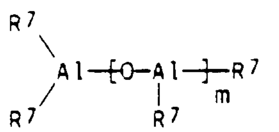

(II)

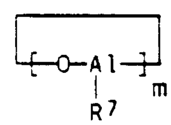

(III)

   où $R^7$ représente un radical alkyle en $C_1$ à $C_4$ et m représente un nombre dont la valeur varie de 5 à 30.

2. Procédé suivant la revendication 1, caractérisé en ce que les substituants $R^1$ et $R^2$ représentent des radicaux alkyle en $C_4$ à $C_{10}$ ramifiés.

3. Procédé suivant la revendication 1 ou 2, caractérisé en ce que les symboles $R^3$, $R^4$, $R^5$ et $R^6$ représentent des radicaux alkyle en $C_1$ à $C_4$.

4. Procédé suivant l'une quelconque des revendications 1 à 3, caractérisé en ce que X représente du chlore.

5. Procédé suivant l'une quelconque des revendications 1 à 4, caractérisé en ce que M représente le zirconium.

6. Procédé suivant l'une quelconque des revendications 1 à 5, caractérisé en ce que Y représente le silicium.

7. Procédé suivant l'une quelconque des revendications 1 à 6, caractérisé en ce que le complexe de métallocène a) et le composé d'alumoxanne b) s'utilisent en proportions telles que le rapport atomique entre l'aluminium provenant de l'alumoxanne b) et le métal de transition provenant du complexe de métallocène a) fluctue de 10:1 à $10^6$:1.

8. Procédé de préparation de polymères d'alc-1-ènes en $C_2$ à $C_{10}$, à des températures de -50 à 150 °C et sous des pressions de 0,1 à 100 bars, à l'aide d'un système catalytique constitué de complexes de

bis-cyclopentadiényle de métaux de transition et de composés d'alumoxanne, caractérisé en ce que l'on utilise, pour sa mise en oeuvre, des systèmes catalytiques suivant l'une quelconque des revendications 1 à 7.